(19) Europäisches Patentamt / European Patent Office / Office européen des brevets

(11) **EP 4 343 736 A1**

(12) **EUROPEAN PATENT APPLICATION**

(43) Date of publication:
**27.03.2024  Bulletin 2024/13**

(21) Application number: **22306383.5**

(22) Date of filing: **21.09.2022**

(51) International Patent Classification (IPC):
**G09C 1/00** $^{(2006.01)}$     **H04L 9/06** $^{(2006.01)}$
**H04L 9/30** $^{(2006.01)}$

(52) Cooperative Patent Classification (CPC):
**G09C 1/00; H04L 9/0631; H04L 9/3093;**
H04L 2209/125

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **THALES DIS CPL USA, INC.**
**Austin, TX 78759 (US)**

(72) Inventors:
• **BERZATI, Alexandre**
  **92190 Meudon (FR)**
• **MIGAIROU, Vincent**
  **92190 MEUDON (FR)**

(74) Representative: **Bricks, Amélie**
**Thales Dis France SAS**
**Intellectual Property Department**
**6, rue de la Verrerie**
**92190 Meudon (FR)**

(54) **METHOD FOR OPTIMIZING AN EXECUTION OF A CRYPTOGRAPHIC PROCESS BASED ON MATRIX EXPANSION**

(57) The present invention relates to a method for optimizing an execution of a cryptographic process from a key value, said cryptographic process comprising : a matrix expansion mapping said key value into a matrix in a Number Theoretic Transform domain representation using an extendable output function, each element of the polynomial matrix being a polynomial, and a polynomial multiplication between said polynomial matrix and a vector of polynomials, said method being performed by a cryptographic device comprising a processor, an extendable output function hardware accelerator and a memory storing said vector and comprising :

▪ for each polynomial element of the polynomial matrix, repeating the following steps until all coefficients of the polynomial element of the polynomial matrix are generated :
- by said extendable output function hardware accelerator, generating (S1) a set of coefficients of the polynomial element of the polynomial matrix from said key value using the extendable output function,
- by said processor, performing (S2) a polynomial multiplication between said vector stored in said memory and at least one generated set of coefficients of the polynomial element of the polynomial matrix to obtain a partial polynomial multiplication result,
- storing (S3) said partial polynomial multiplication result in said memory,
wherein generating (S1) a set of coefficients of the polynomial element by said extendable output function hardware accelerator and performing a polynomial multiplication between said vector and at least one different generated set of coefficients by said processor are performed in parallel for at least a part of the generated sets of coefficients,

▪ obtaining (S4) a result of said polynomial multiplication between said polynomial matrix and said vector from said partial polynomial multiplication results stored in said memory.

For each polynomial element of the polynomial matrix A, until all coefficients of the polynomial element of the polynomial matrix A are generated :

S1 — Generating a set of coefficients of the polynomial element of the polynomial matrix A

S2 — Performing a polynomial multiplication between said vector y stored in said memory and said generated set of coefficients of the polynomial element of the polynomial matrix A to obtain a partial polynomial multiplication result

S3 — Storing said partial polynomial multiplication result in the memory

S4 — Obtaining a result of said polynomial multiplication between said polynomial matrix A and said vector y from said stored partial polynomial multiplication results

**Fig. 8**

## Description

### FIELD OF THE INVENTION

The present invention relates to the field of cryptographic schemes, and of associated cryptographic devices, and more particularly to cryptographic schemes based on matrix expansion using an extendable output function.

### BACKGROUND OF THE INVENTION

The increasing computational power of quantum computers is a growing threat to the security of classical cryptographic schemes such as RSA or ECDSA. Such schemes will eventually be completely defenseless against attacks performed using quantum computers. Therefore, work is being done to develop new efficient schemes that would be resistant against such attacks.

Lattice based schemes have been proved resistant to quantum computer attacks. Among this class of schemes, Dillithium and Kyber have been selected by the NIST to become Post-Quantum Cryptography standards for supporting respectively signature and encryption.

Such PQC schemes require the computation of a key dependent matrix that is used at key generation, signature generation and signature verification, or encryption and decryption. It may be stored in memory but it may not be possible on devices with low available memory. Alternatively, it is recomputed on demand each time it is needed.

A first drawback of doing so is the impact of such matrix computations on calculation time, especially in the case of key generation where 80% of the whole operation time may be dedicated to the generation of this key-dependent matrix.

A second drawback of such existing schemes is the memory footprint of the computed matrix. Since each Matrix elements is itself a polynomial with for example 256 coefficients, it can be large, for example between 16 ko and 56 ko in the case of Dilithium, which can be an issue for system with low memory resources such as smart cards, hardware security modules or IoT devices.

As a result, there is a need for a method enabling to execute cryptographic operations such as key generation, signature generation and verification or encryption and decryption for schemes based on matrix expansion with a lower impact of the key-dependent matrix generation and use on both memory footprint and execution time of such schemes' operations.

### SUMMARY OF THE INVENTION

For this purpose and according to a first aspect, this invention therefore relates to a method for optimizing an execution of a cryptographic process from a key value, said cryptographic process comprising :

- a matrix expansion mapping said key value into a matrix in a Number Theoretic Transform domain representation using an extendable output function, each element of the polynomial matrix being a polynomial,
- and a polynomial multiplication between said polynomial matrix and a vector of polynomials,
  said method being performed by a cryptographic device comprising a processor, an extendable output function hardware accelerator and a memory storing said vector and comprising :

  • for each polynomial element of the polynomial matrix, repeating the following steps until all coefficients of the polynomial element of the polynomial matrix are generated :

- by said extendable output function hardware accelerator, generating a set of coefficients of the polynomial element of the polynomial matrix from said key value using the extendable output function,
- by said processor, performing a polynomial multiplication between said vector stored in said memory and at least one generated set of coefficients of the polynomial element of the polynomial matrix to obtain a partial polynomial multiplication result,
- storing said partial polynomial multiplication result in said memory, wherein generating a set of coefficients of the polynomial element by said extendable output function hardware accelerator and performing a polynomial multiplication between said vector and at least one different generated set of coefficients by said processor are performed in parallel for at least a part of the generated sets of coefficients,

  • obtaining a result of said polynomial multiplication between said polynomial matrix and said vector from said partial polynomial multiplication results stored in said memory.

By doing so, the full polynomial matrix is not stored anymore in memory. Only a reduced amount of coefficients of this matrix has to be stored concurrently at any time of the process. Therefore, the size occupied in memory is greatly reduced. In addition, the generation of these coefficients is performed for the most part in parallel to the computation of the polynomial multiplications. As a result, the execution time of the process is also reduced.

Said cryptographic process may be among a key generation process, a signature generation process, a signature verification, an encryption process and a decryption process.

Said cryptographic process may be a Dilithium cryptographic process or Kyber cryptographic process.

Said extendable output function is Keccak hash function.

Said extendable output function may be among SHAKE-128, SHAKE-256, AES-128 and AES-256.

According to an embodiment, said processor comprises at least one processor register, and the method according to the first aspect comprises a step of storing in said at least one processor register said set of coefficients generated by said extendable output function hardware accelerator.

By doing so, the memory footprint of the cryptographic process is further reduced: only the result of the polynomial multiplication is stored in memory while the coefficients of the polynomial matrix only occupy space in processor registers.

According to a second aspect, this invention therefore relates also to a computer program product directly loadable into the memory of at least one computer, comprising software code instructions for performing the steps of the method according to the first aspect when said product is run on the computer.

According to a third aspect, this invention therefore relates also to a cryptographic device comprising a processor, an extendable function hardware accelerator and a memory configured for performing the steps of the method according to the first aspect.

## BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.

- Figure 1 is a schematic illustration of a cryptographic device according to an embodiment of the present invention;
- Figure 2 is a schematic illustration of the key generation, signature generation and signature verification processes of the Dilithium cryptographic scheme;
- Figures 3a and 3b are schematic illustrations of the key generation and encryption processes for the Kyber cryptographic scheme;
- Figure 4 illustrates schematically a method for generating a matrix by matrix expansion from the state value of a XOF function;
- Figure 5 is a schematic illustration of a method for performing a polynomial multiplication operation between a matrix A and a polynomial vector according prior art;
- Figure 6 illustrates schematically a method for performing a polynomial multiplication operation between a matrix A and a polynomial vector according to an embodiment of the present invention;

- Figure 7 is a schematic illustration of a method for computing $A_{1,1}*y_1$ according to an embodiment of the present invention;
- Figure 8 illustrates schematically a method for generating the elements of a matrix from a key value and for computing a polynomial multiplication between these elements and a vector of polynomials y according to an embodiment of the present invention.

## DETAILED DESCRIPTION OF EMBODIMENTS OF THE INVENTION

The invention relates to methods, and associated devices, for optimizing the execution of a cryptographic process comprising a matrix expansion mapping a key value into a matrix using an extendable output function XOF, and a subsequent polynomial multiplication between this matrix and a vector of polynomials. Such a key value may for example be either a part of a public or private key or a value derived from such a public or private key.

Such a cryptographic process may for example be a key generation process or a signature generation process or a signature verification process using Dilithium cryptographic scheme, or an encryption process or a decryption process using Kyber cryptographic scheme.

Such a cryptographic process may be performed by a cryptographic device 100. Such a device may for example be a personal computer or a server. It may also be a tamper-proof device such as a Hardware Security Module HSM. It may also be a smaller device such as a smartchip.

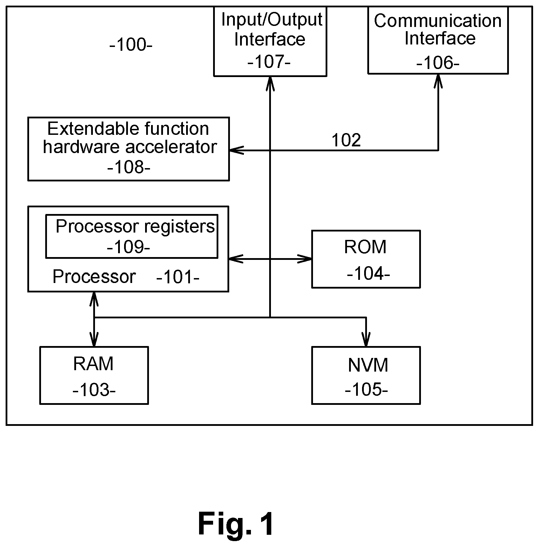

**Figure 1** is a schematic illustration of such a cryptographic device 100. It may include a processor 101 connected via a bus 102 to a random access memory (RAM) 103, a read-only memory (ROM) 104, and/or a non-volatile memory (NVM) 105. The processor 101 may also comprise at least one processor register 109 for storing calculation inputs or outputs. It may further include a communication interface 106 connected to the bus and which may be used to connect the device to various forms of wireless networks, e.g., wide-area networks, WiFi networks, or mobile telephony networks, or to wired networks such as an Ethernet network. It may also include an input-output interface 107 providing interfaces to an administrator, such as one or more screens, loudspeakers, a mouse, tactile surfaces, a keyboard etc... The cryptographic device may further include a coprocessor 108. This coprocessor may be dedicated to performing cryptographic computations in the frame of the execution of the cryptographic process. For example, it may be a hardware accelerator implementing the extendable output function, such as a FPGA or an ASIC. This coprocessor may be a separate chip in the cryptographic device or it may be included with the processor in a SoC.

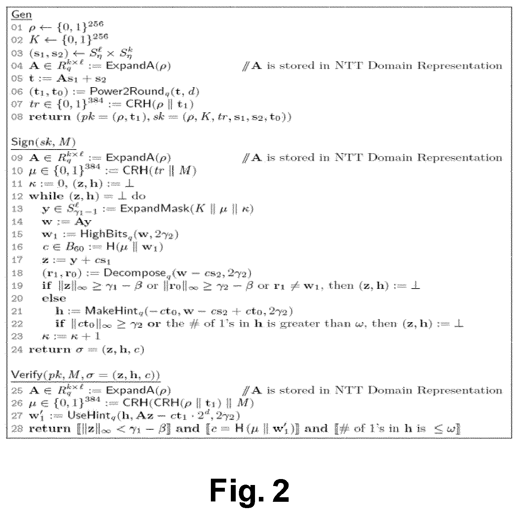

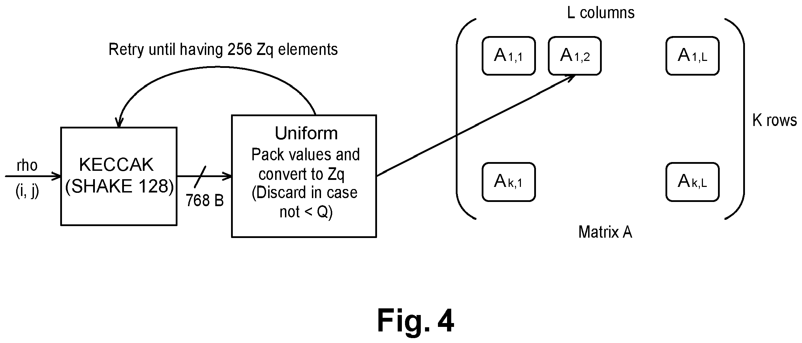

Dilithium cryptographic scheme full description can be found in « CRYSTALS-Dilithium : A Lattice-Based Digital Signature Scheme" by L. Ducas, E. Kiltz, T. Lepoint, V. Lyubashevsky, P. Schwabe, G. Seiler and D. Stehle, IACR Transactions on Cryptographic Hardware and Embedded Systems Vol 0, No.0.. The key generation, signature generation and signature verification processes of this scheme are described on Figure 4 of this reference document and reproduced here on **Figure 2.**

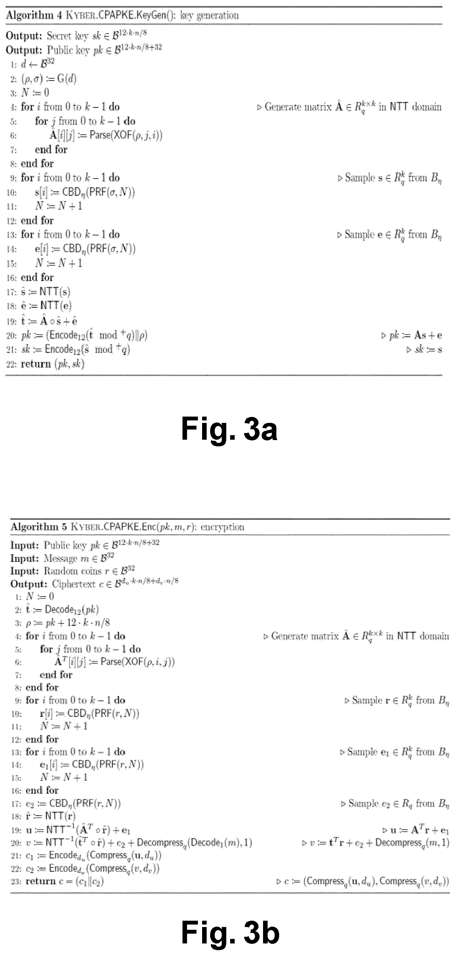

Kyber cryptographic scheme full description can be found in « CRYSTALS-KYBER Algorithm Specifications And Supporting Documentation (version 2.0) » by R. Avanzi, J. Bos, L. Ducas, E. Kiltz, T. Lepoint, V. Lyubashevsky, J. M. Schanck, P. Schwabe, G. Seiler, D. Stehlé, April 1, 2019. The key generation and encryption processes for this scheme are described in Algorithm 4 and 5 of this reference document as illustrated here on **Figures 3a** and **3b.**

In all these cryptographic processes, a matrix is generated from a key value using an extendable output function:

- in Dilithium, a value Rho in $\{0,1\}^{256}$ is part of the public key pk from the key pair used for the cryptographic operations. An ExpandA function generates, from this value Rho, a matrix A of size k*l, with k and l integers, whose elements are all polynomials in $Zq[X]/(X^{256}+1)$ with q an integer equal to $2^{23} - 2^{13} +1$, with ^ the exponent symbol;
- in Kyber, a value Rho is either part of the public key pk, or derived from the public key (Rho=pk+12k*n/8 with k an integer and n=256). The (Parse o XOF) operation applied to the value Rho generates a matrix Â of size k*k, whose elements are all polynomials in $Zq[X]/(X^{256}+1)$ with q an integer equal to 3329, with ^ the exponent symbol.

In both Dilithium and Kyber schemes, the respective matrix A and Â are represented in NTT (Number Theoretic Tranform) domain representation.

Integers k and I defining the size of the matrix may be chosen depending on the desired security level of the cryptographic process.

In all these cryptographic processes, the matrix A or Â is, subsequently to its generation, subject to a polynomial multiplication with a vector of polynomials:

- in Dilithium key generation, A is multiplied with a vector s1
- in Dilithium signature generation, A is multiplied with a vector y
- in Dilithium signature verification, A is multiplied with a vector z
- in Kyber key generation, Â is multiplied by a vector s
- in Kyber encryption, Â is multiplied by a vector r.

The matrix A or Â generated by matrix expansion is generated using an extendable output function XOF. Such a XOF may for example be Keccak hash function in Dilithium scheme or Kyber scheme. It may for example be SHAKE-128 or SHAKE-256. Alternatively, it may be AES-128 or AES-256 in counter mode as in Kyber scheme.

As shown on **Figure 4,** the matrix A or Â generated by matrix expansion is generated by repeatedly squeezing values from the state value of the XOF function, until all coefficients of all elements of the matrix have been generated. For example, when Keccak function is used for generating the matrix A for Dilithium or Kyber schemes, as shown on Figure 3, bits may be squeezed by batches of 168 bytes. Each set of 3 bytes is treated as a 24-bit-long integer in the case of Dilithium, and as a 16-bit-long integer in the case of Kyber. Integers above the value of q are rejected and those below q are stored as one coefficient of an element $A_{i,j}$ of the matrix A with i in $\{1,..., k\}$ and j in $\{1,...,l\}$. For each element $A_{i,j}$, Keccak function is iterated to squeeze 168 new bytes from its internal state as many times as needed, until 256 coefficients have been obtained. As an example, usually around 7 iterations are required for each element $A_{i,j}$ in the case of Dilithium, in order to obtain its 256 coefficients.

Assuming that each 16/24-bits coefficient occupies in memory a 32-bits memory word, each element $A_{i,j}$ occupies 1 kByte. When all the k*l elements of the matrix are stored in memory, the footprint of the matrix A is k*l kBytes.

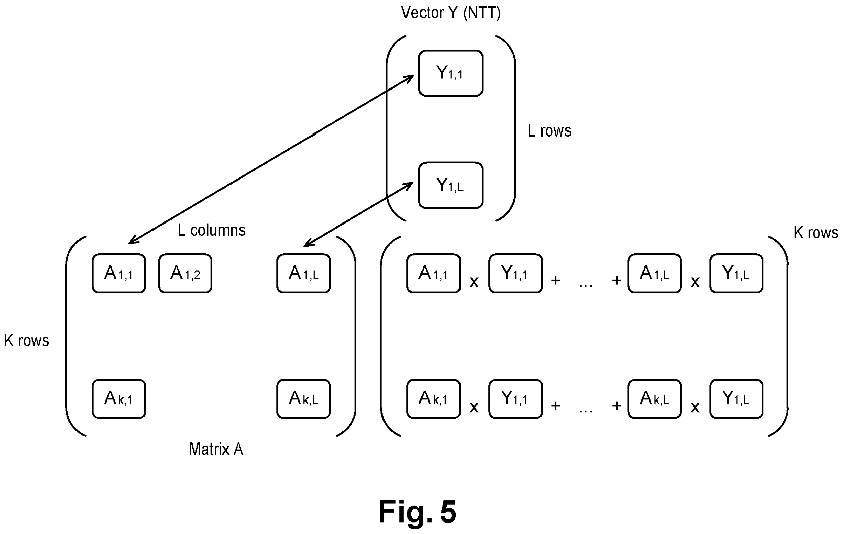

As shown on **Figure 5,** prior art implementations of schemes such as Dilithium and Kyber perform a one-shot polynomial multiplication operation between the matrix A and a polynomial vector, labeled y on Figure 4. Such an operation has a total memory footprint equal to k*l kB (matrix A) + l kB (vector y) + k kB (result) = k*l + l + k kBytes.

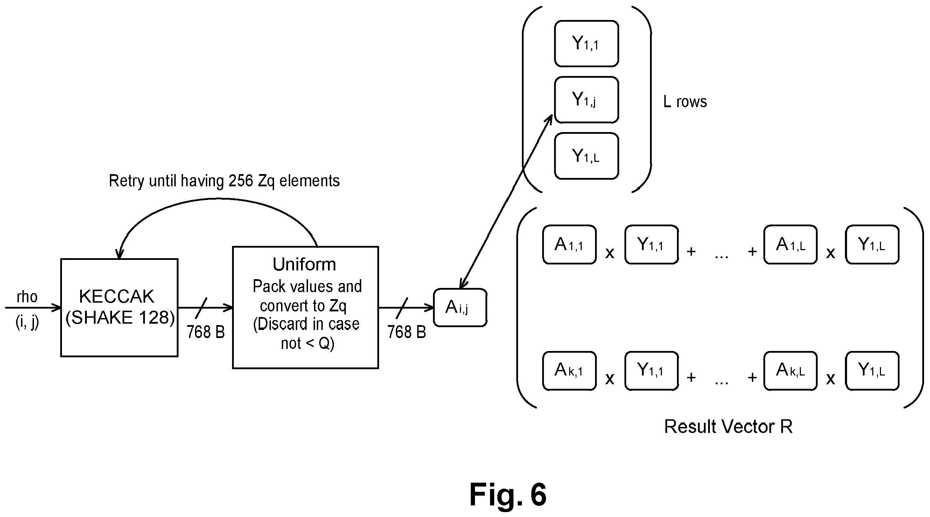

A first idea of the invention in order to decrease the footprint of the cryptographic operations on the resources of the cryptographic device is to avoid storing the full matrix A in memory before computing its multiplication with a vector of polynomials. In order to do so, as shown on **Figure 6,** after each element $A_{i,j}$ of the matrix is generated from the XOF function output, the polynomial multiplication between $A_{i,j}$ and the corresponding element of said vector is directly computed and added to the result. If we call y this vector input to the polynomial multiplication and R the result, $A_{i,j} * y_j$ is computed and added to the element $R_i$ of the result. After this calculation, the element $A_{i,j}$ is no more to be used and can be discarded. By doing so, the maximum memory footprint of the polynomial multiplication is I kB (vector y) + k kB (result) + 1 kB (Ai,j) = l+k+1 kBytes.

A second idea of the invention is to further decrease the footprint of the cryptographic process by reducing its execution time. For doing so, the idea is to take advantage of the fact that the time needed for generating an element $A_{i,j}$ of the matrix A is much lower than the time needed to compute the polynomial multiplication between the generated element and another polynomial (when computing $A_{i,j} * y_j$). Therefore, as shown on **Figure**

**7** which describes the computation steps for computing $A_{1,1}*y_1$, the task of generating the elements $A_{i,j}$ of the matrix can be offloaded to the hardware accelerator and executed in parallel to the computation of polynomial multiplications by the processor. By doing so, the computation time of the whole process of generating the matrix and computing the polynomial multiplication is boiled down to the sum of the computation times of the polynomial multiplications of each element of the matrix; and the generation of the elements of the matrix induces no additional computation time.

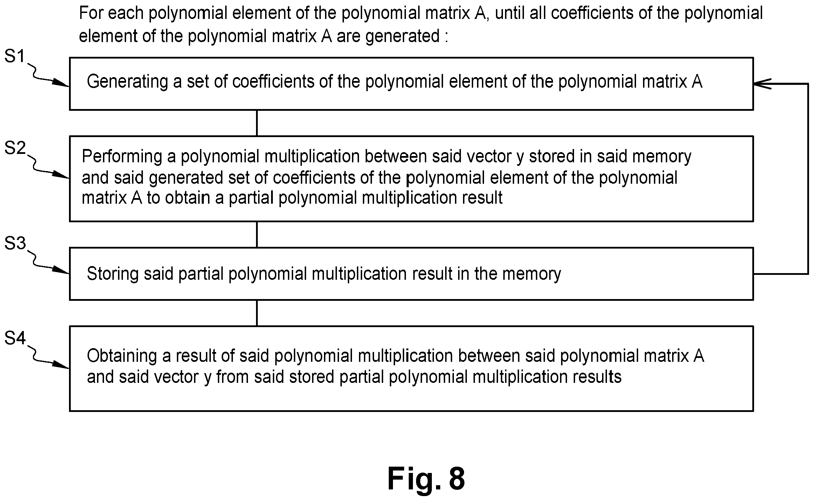

The following paragraphs describe with more details the steps of the methods of the invention for generating the elements of the matrix from the key value and for computing a polynomial multiplication between these elements and a vector of polynomials y as described in **Figure 8.** In the following paragraphs, the matrix whose elements are polynomials generated by an extendable output function is called polynomial matrix and is generically noted A, and the polynomial vector which it is multiplied with is generically noted y, whatever the kind of cryptographic scheme it is used in (Dilithium, Kyber...) and whatever the cryptographic process (key generation, signature generation, encryption etc...) it is part of.

For each polynomial element $A_{i,j}$ of the polynomial matrix A, with i in {1,...,k} and j in {1,...,l} the cryptographic device may repeat the following steps S1, S2 and S3 until all coefficients of the polynomial element of the polynomial matrix are generated.

In a first step S1, the extendable output function hardware accelerator generates a set of coefficients of the polynomial element $A_{i,j}$ of the polynomial matrix from the key value using the extendable output function. As described above for existing implementations of Dilithium and Kyber, it may for example squeeze 168 bytes of the internal state of Keccak function and generate one coefficient for the polynomial element $A_{i,j}$ from each 3 bytes of these 168 bytes.

In a second step S2, the processor performs a polynomial multiplication between the vector y stored in the memory of the cryptographic device and at least one set of coefficients of the polynomial element $A_{i,j}$ of the polynomial matrix generated at the first step, to obtain a partial polynomial multiplication result. Let us consider that

$$A_{i,j}(X) = \sum_{m=0}^{m=255} A_{i,j,m} * X^m$$

with $A_{i,j,m}$ the $m^{th}$ coefficient of the element $A_{i,j}$ of the polynomial matrix A. The polynomial multiplication between a set of coefficients $A_{i,j,m}$ with m in {u,...v} and the vector y may consist in the computation of the polynomial product

$$\left(\sum_{m=u}^{m=v} A_{i,j,m} * X^m\right) * y_j(X).$$

In a third step S3, the partial polynomial multiplication result is stored in the memory of the cryptographic device.

By doing so, each set of coefficients $A_{i,j,m}$ of a polynomial element $A_{i,j}$ generated in an iteration of the first step S1 is then, at the corresponding iteration of the second step S2, transformed into a polynomial

$$\left(\sum_{m=u}^{m=v} A_{i,j,m} * X^m\right)$$

and multiplied with a polynomial element $y_j(X)$ of the vector y. After generating a first set of coefficients

$$\left(\sum_{m=u}^{m=v} A_{i,j,m} * X^m\right)$$

at an iteration the first step, the extendable output function hardware accelerator can start generating a new set of coefficients without waiting for the end of the computation by the processor, executing an iteration of the second step, of the polynomial multiplication

$$\left(\sum_{m=u}^{m=v} A_{i,j,m} * X^m\right) * y_j(X).$$

Therefore, the extendable output function hardware accelerator can generate a set of coefficients of the polynomial element in parallel to the computation by the processor of a polynomial multiplication between the vector y and at least one different generated set of coefficients for at least a part of the generated sets of coefficients.

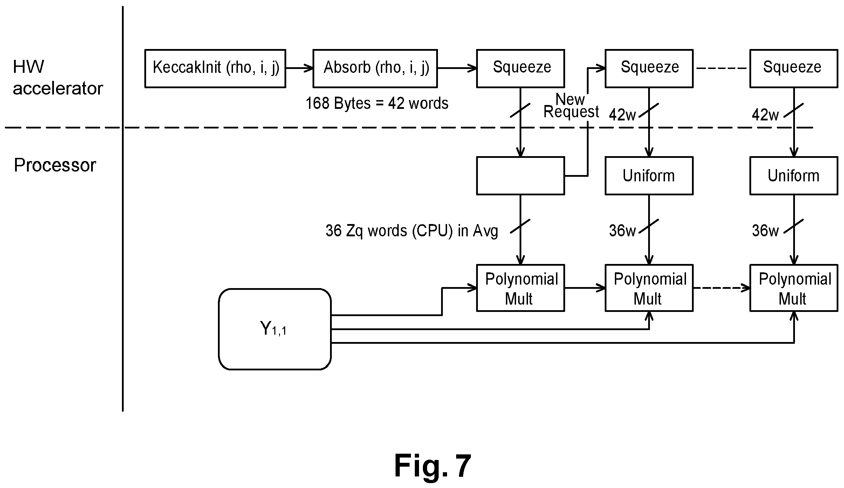

More precisely, as shown on Figure 7, a first set of coefficients for a first element of the polynomial matrix A is generated at the first iteration of the first step S1, while the CPU is not yet computing a polynomial multiplication. Then, since the extendable output function hardware accelerator generates a set of coefficients much faster than the time needed by the processor to perform a polynomial multiplication, each subsequent set of coefficients may be generated by the extendable output function hardware accelerator while the processor is performing a polynomial multiplication using as input at least one set of coefficients previously generated by the extendable output function hardware accelerator.

When the processor starts a new iteration of the second step S2, several sets of coefficients may have been generated by the extendable output function hardware accelerator and be waiting for being processed by the processor. In such a case, the processor in this new iteration of the second step, may compute a polynomial multiplication using as input the vector y and multiple available sets of coefficients for the same element $A_{i,j}$ of the polynomial matrix A.

In order to minimize the number of coefficients to be concurrently stored in memory, the extendable output function hardware accelerator, after generating a set of coefficients, may wait for the processor to start computing a polynomial multiplication using this set of coefficients, before it starts to generate a new set of coefficients. Alternatively, the extendable output function hardware accelerator may generate all coefficients of a given element $A_{i,j}$ of the polynomial matrix in a row, through multiple iterations of the first step S1, and wait for the processor to start the last polynomial multiplication for this element $A_{i,j}$ before generating a set of coefficients for another element of the polynomial matrix A. By doing so, the memory never stores concurrently coefficients of two different elements of the polynomial matrix. Since the memory space required to store a set of coefficients is much lower than the size of the full polynomial matrix A, the extendable output function hardware accelerator may store the generated set of coefficients in one or more processor registers instead of storing it in memory. By doing so, the storing operation is faster, the coefficients are directly available to the processor without subsequent access to the memory and the space occupied in the memory of the cryptographic device is further reduced.

At a fourth step S4, the result of the polynomial multiplication between the polynomial matrix A and the vector y may be obtained by the processor from the partial polynomial multiplication results stored in the memory of the cryptographic device. Indeed, each polynomial multiplication, performed at an iteration of the second step S2, outputs a part of the result of a polynomial multiplication $A_{i,j} * Y_j$ between an element of the polynomial matrix and an element of the vector y. The result to be obtained R=A*y is an array of polynomials

$$R_i = \sum_{j=1}^{j=l} A_{i,j} * y_j$$

. Therefore, each element $R_i$ of the result can be obtained by summing up the partial polynomial multiplication results computed using sets of coefficients of elements $A_{i,j}$ for j=1,...,l and $y_j$. In order to minimize the memory footprint, a single memory space may be reserved for each element $R_i$ of the result. In such a case, at each iteration of the third step S3, the partial polynomial multiplication result to be stored, computed using coefficients of a given $A_{o,p}$ element of the polynomial matrix, may be added to the value already stored in the memory space corresponding to the result element $R_o$. By doing so, each memory space dedicated to a given element $R_i$ of the result R works as an accumulator and eventually stores the value $R_i = \sum_{j=1}^{j=l} A_{i,j} * y_j$ after the last iteration of the second step.

According to a second aspect, the invention is also related to a computer program product directly loadable into the memory of at least one computer, comprising software code instructions for performing the steps of the method described above when said product is run on the computer.

According to a third aspect, the invention is also related to a cryptographic device 100 comprising a processor 101, an extendable function hardware accelerator 108 and a memory 103 configured for performing the steps of the method described above.

As a result, the cryptographic processes involving a matrix expansion and a polynomial multiplication of this matrix can be performed with a much lower memory occupancy, since the full polynomial matrix is not stored in memory, and faster, since the matrix expansion, generating the coefficients of the polynomials of the matrix, is performed in parallel to the execution of the polynomial multiplication.

## Claims

1. A method for optimizing an execution of a cryptographic process from a key value,

    said cryptographic process comprising :

        - a matrix expansion mapping said key value into a matrix (A) in a Number Theoretic Transform domain representation using an extendable output function, each element of the polynomial matrix (A) being a polynomial,
        - and a polynomial multiplication between said polynomial matrix (A) and a vector (y) of polynomials,

    said method being performed by a cryptographic device (100) comprising a processor (101), an extendable output function hardware accelerator (108) and a memory (103) storing said vector (y) and comprising :

        ▪ for each polynomial element of the polynomial matrix (A), repeating the following steps until all coefficients of the polynomial element of the polynomial matrix (A) are generated :

            - by said extendable output function hardware accelerator, generating (S1) a set of coefficients of the polynomial element of the polynomial matrix (A) from said key value using the extendable output function,
            - by said processor, performing (S2) a polynomial multiplication between said vector (y) stored in said memory (RAM) and at least one generated set of coefficients of the polynomial element of the polynomial matrix (A) to obtain a partial polynomial multiplication result,
            - storing (S3) said partial polynomial multiplication result in said memory, wherein generating (S1) a set of coefficients of the polynomial element by said extendable output function hardware accelerator and performing a polynomial multiplication between said vector (y) and at least one different generated set of coefficients by said processor are performed in parallel for at least a part of the generated sets of coefficients,

- obtaining (S4) a result of said polynomial multiplication between said polynomial matrix (A) and said vector (y) from said partial polynomial multiplication results stored in said memory.

2. The method of claim 1, wherein said cryptographic process is among a key generation process, a signature generation process, a signature verification, an encryption process and a decryption process.

3. The method of claim 1 or 2, wherein said cryptographic process is a Dilithium cryptographic process or Kyber cryptographic process.

4. The method of any of claims 1 to 3, wherein said extendable output function is Keccak hash function.

5. The method of any of claims 1 to 4, wherein said extendable output function is among SHAKE-128, SHAKE-256, AES-128 and AES-256.

6. The method of any of claims 1 to 5, wherein said processor comprises at least one processor register (109), comprising storing in said at least one processor register said set of coefficients generated by said extendable output function hardware accelerator.

7. A computer program product directly loadable into the memory of at least one computer, comprising software code instructions for performing the steps of any one of claim 1 to 6 when said product is run on the computer.

8. A cryptographic device (100) comprising a processor (101), an extendable function hardware accelerator (108) and a memory (103) configured for performing the steps of any one of claim 1 to 6.

**Fig. 1**

```
Gen
01  ρ ← {0,1}^256
02  K ← {0,1}^256
03  (s_1, s_2) ← S_η^ℓ × S_η^k
04  A ∈ R_q^{k×ℓ} := ExpandA(ρ)              // A is stored in NTT Domain Representation
05  t := As_1 + s_2
06  (t_1, t_0) := Power2Round_q(t, d)
07  tr ∈ {0,1}^384 := CRH(ρ ∥ t_1)
08  return (pk = (ρ, t_1), sk = (ρ, K, tr, s_1, s_2, t_0))

Sign(sk, M)
09  A ∈ R_q^{k×ℓ} := ExpandA(ρ)              // A is stored in NTT Domain Representation
10  μ ∈ {0,1}^384 := CRH(tr ∥ M)
11  κ := 0, (z, h) := ⊥
12  while (z, h) = ⊥ do
13      y ∈ S_{γ_1-1}^ℓ := ExpandMask(K ∥ μ ∥ κ)
14      w := Ay
15      w_1 := HighBits_q(w, 2γ_2)
16      c ∈ B_60 := H(μ ∥ w_1)
17      z := y + cs_1
18      (r_1, r_0) := Decompose_q(w − cs_2, 2γ_2)
19      if ‖z‖_∞ ≥ γ_1 − β or ‖r_0‖_∞ ≥ γ_2 − β or r_1 ≠ w_1, then (z, h) := ⊥
20      else
21          h := MakeHint_q(−ct_0, w − cs_2 + ct_0, 2γ_2)
22          if ‖ct_0‖_∞ ≥ γ_2 or the # of 1's in h is greater than ω, then (z, h) := ⊥
23      κ := κ + 1
24  return σ = (z, h, c)

Verify(pk, M, σ = (z, h, c))
25  A ∈ R_q^{k×ℓ} := ExpandA(ρ)              // A is stored in NTT Domain Representation
26  μ ∈ {0,1}^384 := CRH(CRH(ρ ∥ t_1) ∥ M)
27  w_1' := UseHint_q(h, Az − ct_1 · 2^d, 2γ_2)
28  return ⟦‖z‖_∞ < γ_1 − β⟧ and ⟦c = H(μ ∥ w_1')⟧ and ⟦# of 1's in h is ≤ ω⟧
```

# Fig. 2

---

**Algorithm 4** KYBER.CPAPKE.KeyGen(): key generation

---

**Output:** Secret key $sk \in \mathcal{B}^{12 \cdot k \cdot n/8}$
**Output:** Public key $pk \in \mathcal{B}^{12 \cdot k \cdot n/8 + 32}$

1: $d \leftarrow \mathcal{B}^{32}$
2: $(\rho, \sigma) := G(d)$
3: $N := 0$
4: **for** $i$ from 0 to $k - 1$ **do**         $\triangleright$ Generate matrix $\hat{\mathbf{A}} \in R_q^{k \times k}$ in NTT domain
5:      **for** $j$ from 0 to $k - 1$ **do**
6:          $\hat{\mathbf{A}}[i][j] := \mathsf{Parse}(\mathsf{XOF}(\rho, j, i))$
7:      **end for**
8: **end for**
9: **for** $i$ from 0 to $k - 1$ **do**         $\triangleright$ Sample $\mathbf{s} \in R_q^k$ from $B_\eta$
10:      $\mathbf{s}[i] := \mathsf{CBD}_\eta(\mathsf{PRF}(\sigma, N))$
11:      $N := N + 1$
12: **end for**
13: **for** $i$ from 0 to $k - 1$ **do**         $\triangleright$ Sample $\mathbf{e} \in R_q^k$ from $B_\eta$
14:      $\mathbf{e}[i] := \mathsf{CBD}_\eta(\mathsf{PRF}(\sigma, N))$
15:      $N := N + 1$
16: **end for**
17: $\hat{\mathbf{s}} := \mathsf{NTT}(\mathbf{s})$
18: $\hat{\mathbf{e}} := \mathsf{NTT}(\mathbf{e})$
19: $\hat{\mathbf{t}} := \hat{\mathbf{A}} \circ \hat{\mathbf{s}} + \hat{\mathbf{e}}$
20: $pk := (\mathsf{Encode}_{12}(\hat{\mathbf{t}} \bmod {}^+q) \| \rho)$         $\triangleright pk := \mathbf{As} + \mathbf{e}$
21: $sk := \mathsf{Encode}_{12}(\hat{\mathbf{s}} \bmod {}^+q)$         $\triangleright sk := \mathbf{s}$
22: **return** $(pk, sk)$

---

# Fig. 3a

---

**Algorithm 5** KYBER.CPAPKE.Enc($pk, m, r$): encryption

---

**Input:** Public key $pk \in \mathcal{B}^{12 \cdot k \cdot n/8 + 32}$
**Input:** Message $m \in \mathcal{B}^{32}$
**Input:** Random coins $r \in \mathcal{B}^{32}$
**Output:** Ciphertext $c \in \mathcal{B}^{d_u \cdot k \cdot n/8 + d_v \cdot n/8}$

1: $N := 0$
2: $\hat{\mathbf{t}} := \mathsf{Decode}_{12}(pk)$
3: $\rho := pk + 12 \cdot k \cdot n/8$
4: **for** $i$ from 0 to $k - 1$ **do**         $\triangleright$ Generate matrix $\hat{\mathbf{A}} \in R_q^{k \times k}$ in NTT domain
5:      **for** $j$ from 0 to $k - 1$ **do**
6:          $\hat{\mathbf{A}}^T[i][j] := \mathsf{Parse}(\mathsf{XOF}(\rho, i, j))$
7:      **end for**
8: **end for**
9: **for** $i$ from 0 to $k - 1$ **do**         $\triangleright$ Sample $\mathbf{r} \in R_q^k$ from $B_\eta$
10:      $\mathbf{r}[i] := \mathsf{CBD}_\eta(\mathsf{PRF}(r, N))$
11:      $N := N + 1$
12: **end for**
13: **for** $i$ from 0 to $k - 1$ **do**         $\triangleright$ Sample $\mathbf{e}_1 \in R_q^k$ from $B_\eta$
14:      $\mathbf{e}_1[i] := \mathsf{CBD}_\eta(\mathsf{PRF}(r, N))$
15:      $N := N + 1$
16: **end for**
17: $e_2 := \mathsf{CBD}_\eta(\mathsf{PRF}(r, N))$         $\triangleright$ Sample $e_2 \in R_q$ from $B_\eta$
18: $\hat{\mathbf{r}} := \mathsf{NTT}(\mathbf{r})$
19: $\mathbf{u} := \mathsf{NTT}^{-1}(\hat{\mathbf{A}}^T \circ \hat{\mathbf{r}}) + \mathbf{e}_1$         $\triangleright \mathbf{u} := \mathbf{A}^T \mathbf{r} + \mathbf{e}_1$
20: $v := \mathsf{NTT}^{-1}(\hat{\mathbf{t}}^T \circ \hat{\mathbf{r}}) + e_2 + \mathsf{Decompress}_q(\mathsf{Decode}_1(m), 1)$    $\triangleright v := \mathbf{t}^T \mathbf{r} + e_2 + \mathsf{Decompress}_q(m, 1)$
21: $c_1 := \mathsf{Encode}_{d_u}(\mathsf{Compress}_q(\mathbf{u}, d_u))$
22: $c_2 := \mathsf{Encode}_{d_v}(\mathsf{Compress}_q(v, d_v))$
23: **return** $c = (c_1 \| c_2)$         $\triangleright c := (\mathsf{Compress}_q(\mathbf{u}, d_u), \mathsf{Compress}_q(v, d_v))$

---

# Fig. 3b

Retry until having 256 Zq elements

rho (i, j) → KECCAK (SHAKE 128) → 768 B → Uniform Pack values and convert to Zq (Discard in case not < Q) →

L columns

$$\begin{pmatrix} A_{1,1} & A_{1,2} & & A_{1,L} \\ & & & \\ A_{k,1} & & & A_{k,L} \end{pmatrix}$$ K rows

Matrix A

**Fig. 4**

Vector Y (NTT)

$Y_{1,1}$

L rows

$Y_{1,L}$

L columns

$A_{1,1}$  $A_{1,2}$  $A_{1,L}$

K rows

$A_{k,1}$  $A_{k,L}$

Matrix A

$A_{1,1}$ x $Y_{1,1}$ + ... + $A_{1,L}$ x $Y_{1,L}$

K rows

$A_{k,1}$ x $Y_{1,1}$ + ... + $A_{k,L}$ x $Y_{1,L}$

# Fig. 5

Fig. 6

HW
accelerator

| KeccakInit (rho, i, j) | → | Absorb (rho, i, j) | → | Squeeze | | Squeeze | ------ | Squeeze |

168 Bytes = 42 words

New
Request  42w          42w

Processor

| | | Uniform | | Uniform |

36 Zq words (CPU) in Avg          36w          36w

| Polynomial Mult | → | Polynomial Mult | ---→ | Polynomial Mult |

$Y_{1,1}$

# Fig. 7

For each polynomial element of the polynomial matrix A, until all coefficients of the polynomial element of the polynomial matrix A are generated :

S1

Generating a set of coefficients of the polynomial element of the polynomial matrix A

S2

Performing a polynomial multiplication between said vector y stored in said memory and said generated set of coefficients of the polynomial element of the polynomial matrix A to obtain a partial polynomial multiplication result

S3

Storing said partial polynomial multiplication result in the memory

S4

Obtaining a result of said polynomial multiplication between said polynomial matrix A and said vector y from said stored partial polynomial multiplication results

## Fig. 8

Europäisches
Patentamt

European
Patent Office

Office européen
des brevets

# EUROPEAN SEARCH REPORT

Application Number

EP 22 30 6383

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WANG TENGFEI ET AL: "Efficient Implementation of Dilithium Signature Scheme on FPGA SoC Platform", IEEE TRANSACTIONS ON VERY LARGE SCALE INTEGRATION (VLSI) SYSTEMS, IEEE SERVICE CENTER, PISCATAWAY, NJ, USA, vol. 30, no. 9, 1 September 2022 (2022-09-01), pages 1158-1171, XP011918926, ISSN: 1063-8210, DOI: 10.1109/TVLSI.2022.3179459 [retrieved on 2022-06-29] * paragraph [000I] - paragraph [0III] * ----- | 1-8 | INV. G09C1/00 H04L9/06 H04L9/30 |
| A | GEORG LAND ET AL: "A Hard Crystal - Implementing Dilithium on Reconfigurable Hardware", IACR, INTERNATIONAL ASSOCIATION FOR CRYPTOLOGIC RESEARCH , vol. 19700101:000000 1 January 1970 (1970-01-01), pages 1-20, XP061068837, Retrieved from the Internet: URL:https://eprint.iacr.org/2021/355.pdf [retrieved on 2021-09-29] * paragraphs [0002], [0004] * ----- | 1-8 | |
| | -/-- | | TECHNICAL FIELDS SEARCHED (IPC)<br><br>G09C<br>H04L |

The present search report has been drawn up for all claims

| Place of search | Date of completion of the search | Examiner |
|---|---|---|
| Munich | 7 March 2023 | Bec, Thierry |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................

& : member of the same patent family, corresponding document

EPO FORM 1503 03.82 (P04C01)

## EUROPEAN SEARCH REPORT

**Europäisches Patentamt**
**European Patent Office**
**Office européen des brevets**

| Application Number |
| --- |
| **EP 22 30 6383** |

### DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| A | VIET BA DANG ET AL: "High-Speed Hardware Architectures and FPGA Benchmarking of CRYSTALS-Kyber, NTRU, and Saber", IACR, INTERNATIONAL ASSOCIATION FOR CRYPTOLOGIC RESEARCH , vol. 20211115:125955 14 November 2021 (2021-11-14), pages 1-55, XP061069234, Retrieved from the Internet: URL:https://eprint.iacr.org/2021/1508.pdf [retrieved on 2021-11-14] * paragraph [0004] - paragraph [0005] * | 1-8 | |

TECHNICAL FIELDS SEARCHED (IPC)

The present search report has been drawn up for all claims

| Place of search | Date of completion of the search | Examiner |
| --- | --- | --- |
| Munich | 7 March 2023 | Bec, Thierry |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **L. DUCAS ; E. KILTZ ; T. LEPOINT ; V. LYUBASHEVSKY ; P. SCHWABE ; G. SEILER ; D. STEHLE.** CRYSTALS-Dilithium : A Lattice-Based Digital Signature Scheme. *IACR Transactions on Cryptographic Hardware and Embedded Systems,* vol. 0 (0

- **R. AVANZI ; J. BOS ; L. DUCAS ; E. KILTZ ; T. LEPOINT ; V. LYUBASHEVSKY ; J. M. SCHANCK ; P. SCHWABE ; G. SEILER ; D. STEH-LÉ.** *CRYSTALS-KYBER Algorithm Specifications And Supporting Documentation (version 2.0),* 01 April 2019